(19) Europäisches Patentamt
European Patent Office
Office européen des brevets

(11) **EP 4 648 143 A1**

(12) **EUROPEAN PATENT APPLICATION**
published in accordance with Art. 153(4) EPC

(43) Date of publication:
**12.11.2025 Bulletin 2025/46**

(21) Application number: **24779348.2**

(22) Date of filing: **11.03.2024**

(51) International Patent Classification (IPC):
**H01M 4/96** (2006.01)    **H01M 8/10** (2016.01)

(52) Cooperative Patent Classification (CPC):
**H01M 4/96; H01M 8/10;** Y02E 60/50

(86) International application number:
**PCT/JP2024/009307**

(87) International publication number:
**WO 2024/203218 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023053082
29.03.2023 JP 2023053083**

(71) Applicant: **Toray Industries, Inc.
Tokyo 103-8666 (JP)**

(72) Inventors:
• **KAMEDA, Shunsuke**
Iyo-gun, Ehime 791-3193 (JP)
• **SHINBA, Yoichi**
Otsu-shi, Shiga 520-2141 (JP)
• **UENO, Takumi**
Otsu-shi, Shiga 520-2141 (JP)

(74) Representative: **Prüfer & Partner mbB
Patentanwälte · Rechtsanwälte
Sohnckestraße 12
81479 München (DE)**

(54) **GAS DIFFUSION ELECTRODE BASE MATERIAL AND FUEL CELL**

(57)    Provided is a gas diffusion electrode substrate which is excellent in moisture retention property and water drainability and has excellent fuel cell performance at a low current density and a high current density in a fuel cell. A gas diffusion electrode substrate includes a microporous layer formed on at least one surface of an electrically conductive porous substrate, in which the microporous layer contains a filler containing an organic polymer, the filler having a carbonization yield of 55% or more after heating at 1,000°C for 10 minutes and a mean particle diameter of 5 to 60 μm, the microporous layer contains the filler in a mass percentage of 10 to 45 in a mass percentage of 100 of the microporous layer, and an arithmetic mean roughness Sa of a surface of the microporous layer is 5 to 20 μm.

EP 4 648 143 A1

**Description**

TECHNICAL FIELD

The present invention relates to a fuel cell, and in particular, to a gas diffusion electrode substrate to be used for a polymer electrolyte fuel cell and a fuel cell including the gas diffusion electrode substrate.

BACKGROUND ART

A polymer electrolyte fuel cell in which a hydrogencontaining fuel gas and an oxygen-containing oxidizing gas are supplied to an anode and a cathode, respectively, and an electromotive force is generated by an electrochemical reaction occurring at both electrodes is generally constituted by laminating a separator, a gas diffusion electrode substrate, a catalyst layer, an electrolyte membrane, a catalyst layer, a gas diffusion electrode substrate and a separator in this order. The gas diffusion electrode substrate is required to have high gas diffusivity for allowing a gas supplied from the separator to be diffused into a catalyst layer and high water drainability for discharging water generated by the electrochemical reaction to the separator, as well as high electrical conductivity for extracting generated electric current. Thus, a gas diffusion electrode substrate, on which a microporous layer is formed on a surface of a substrate that is a carbon sheet formed of carbon fibers and the like, is widely used.

However, as problems of such a gas diffusion electrode substrate, there are the following problems: (1) when a polymer electrolyte fuel cell is operated in a low current density area, since the amount of generated water is small and a dry condition is obtained, an electrolyte membrane is dried and proton conductivity is lowered, resulting in deterioration of fuel cell performance; and (2) when the polymer electrolyte fuel cell is operated in a high current density area, conversely, since the amount of generated water is large and a wet condition is obtained, the gas diffusion electrode substrate is clogged by the generated water, and gas supply is insufficient, resulting in deterioration of fuel cell performance. Therefore, the gas diffusion electrode substrate is required to have both high moisture retention property in a low current density area and high water drainability in a high current density area. In order to solve these problems, a method, in which a microporous layer is formed on a surface of a gas diffusion electrode substrate, and particles are blended in the microporous layer to improve moisture retention property and water drainability, has been adopted.

For example, a gas diffusion electrode substrate containing spacer particles in a microporous layer has been proposed (Patent Document 1).

In addition, a gas diffusion electrode substrate containing carbon powder in a microporous layer has been proposed (Patent Document 2).

Further, a gas diffusion electrode substrate containing a hydrophilic additive in a microporous layer has been proposed (Patent Document 3).

PRIOR ART DOCUMENTS

PATENT DOCUMENTS

Patent Document 1: Japanese Patent Laid-open Publication No. 2006-331717
Patent Document 2: Japanese Patent Laid-open Publication No. 2016-195060
Patent Document 3: International Publication No. 2014/014463

SUMMARY OF THE INVENTION

PROBLEMS TO BE SOLVED BY THE INVENTION

However, the technique described in Patent Document 1 can improve gas diffusivity by spacer particles and achieve high water drainability, but does not declare the effect of moisture retention property. In addition, the technique described in Patent Document 2 can improve the adhesiveness to the catalyst layer and the water drainability due to surface roughness caused by the carbon powder, but it is also not effective in terms of the moisture retention property. In addition, the technique described in Patent Document 3 can improve the moisture retention property and the water drainability by the hydrophilic additive, but since an inorganic material such as a metal oxide or carbon black is used as the hydrophilic additive, the effect thereof is not sufficient.

Therefore, in view of the background of the conventional techniques described above, an object of the present invention is to provide a gas diffusion electrode substrate that achieves both moisture retention property and water drainability, which have been conventionally difficult, and is excellent in fuel cell performance at a low current density and a high current density.

SOLUTIONS TO THE PROBLEMS

Embodiments of the present invention are as follows.

(1) A gas diffusion electrode substrate including a microporous layer formed on at least one surface of an electrically conductive porous substrate, in which the microporous layer contains a filler containing an organic polymer, the filler having a carbonization yield of 55% or more after heating at 1,000°C for 10 minutes and a mean particle diameter of 5 to 60 $\mu$m, the microporous layer contains the filler in a mass percentage of 10 to 45 in a mass percentage of 100 of the microporous layer, and an arithmetic mean roughness Sa of a surface of the microporous layer is 5 to 20 $\mu$m.
(2) The gas diffusion electrode substrate according to (1), in which an F/C ratio of the surface of the microporous layer is 0.2 to 0.6.
(3) The gas diffusion electrode substrate according to (1) or (2), in which an O/C ratio of the surface of the microporous layer is 0.1 or less.
(4) The gas diffusion electrode substrate according to any one of (1) to (3), in which the mean particle diameter of the filler is larger than a thickness of the microporous layer.
(5) The gas diffusion electrode substrate according to any one of (1) to (4), in which the mean particle diameter of the filler is 10 to 30 $\mu$m.
(6) The gas diffusion electrode substrate according to any one of (1) to (5), in which the organic polymer is at least one resin selected from the group consisting of a phenolic resin, an acrylic resin, a polyester resin, and a polyether resin.
(7) The gas diffusion electrode substrate according to any one of (1) to (6), in which the organic polymer is a phenolic resin.
(8) The gas diffusion electrode substrate according to any one of (1) to (7), in which a thickness of the microporous layer is 3 to 55 $\mu$m.
(9) The gas diffusion electrode substrate according to any one of (1) to (8), in which the microporous layer has pores having a mean diameter of 10 to 60 $\mu$m, and the microporous layer has an area ratio of the pores formed in the entire cross-section area of the microporous layer of 10 to 50%.
(10) The gas diffusion electrode substrate according to any one of (1) to (9), in which the electrically conductive porous substrate is a carbon paper.
(11) A fuel cell including the gas diffusion electrode substrate according to any one of (1) to (10).

EFFECTS OF THE INVENTION

According to the present invention, it is possible to provide a gas diffusion electrode substrate that achieves both moisture retention property and water drainability, which have been conventionally difficult, and is excellent in fuel cell performance at a low current density and a high current density.

EMBODIMENTS OF THE INVENTION

The present invention provides a gas diffusion electrode substrate including a microporous layer formed on at least one surface of an electrically conductive porous substrate, in which the microporous layer contains a filler containing an organic polymer, the filler having a carbonization yield of 55% or more after heating at 1,000°C for 10 minutes and a mean particle diameter of 5 to 60 $\mu$m, the microporous layer contains the filler in a mass percentage of 10 to 45 in a mass percentage of 100 of the microporous layer, and an arithmetic mean roughness Sa of a surface of the microporous layer is 5 to 20 $\mu$m.
Hereinafter, the electrically conductive porous substrate and the microporous layer constituting the gas diffusion electrode substrate of the present invention, and the fuel cell will be described in detail.

[Electrically Conductive Porous Substrate]

As the electrically conductive porous substrate in the present invention, a porous substrate containing carbon fibers or a porous metal is generally used. Among them, in the present invention, a porous substrate containing carbon fibers such as a carbon fiber woven fabric, a carbon fiber papermaking substrate, a carbon felt, or a carbon paper is preferably used. Here, the carbon paper refers to a sheet formed by bonding a carbon fiber papermaking substrate with a binding material such as a carbonized resin. Among them, in view of being excellent in corrosion resistance and excellent in the property of absorbing dimensional change of the electrolyte membrane in a thickness direction, that is, the "spring property", a carbon paper is more preferable.

Examples of the carbon fiber that can be preferably used for the electrically conductive porous substrate include polyacrylonitrile (PAN)-based, pitch-based, and rayon-based carbon fibers. Among them, PAN-based carbon fibers and pitch-based carbon fibers are preferably used because of their excellent mechanical strength. In addition, natural fibers or synthetic fibers such as rayon fibers, acrylic fibers, and cellulose fibers may be mixed.

A mean diameter of monofilaments of the carbon fiber is preferably 3 to 20 $\mu$m. When the mean diameter is 3 $\mu$m or more, since the pore size of the electrically conductive porous substrate is large and the gas diffusivity or the water drainability is improved, the fuel cell performance of the fuel cell is improved. On the other hand, when the mean diameter is 20 $\mu$m or less, the water vapor diffusivity decreases, and it is possible to suppress deterioration of performance due to drying of the electrolyte membrane or the catalyst layer. That is, the moisture retention property is improved. It is more preferable that the mean diameter of the monofilaments of the carbon fiber is 5 to 10 $\mu$m because these effects are enhanced.

When a carbon fiber papermaking substrate or a carbon paper is used as the electrically conductive porous substrate, a mean length of the monofilaments of the carbon fiber is preferably 3 to 20 mm. When the mean length is 3 mm or more, the electrically conductive porous substrate has excellent mechanical strength, electrical conductivity, and thermal conductivity. Meanwhile, when the mean length is 20 mm or less, excellent carbon fiber dispersibility is attained at the time of papermaking, and a homogeneous electrically conductive porous substrate is obtained. It is more preferable that the mean length of the monofilaments of the carbon fiber is 5 to 15 mm because these effects are enhanced.

A mass per unit area (areal weight) of the electrically conductive porous substrate is preferably 20 to 50 g/m$^2$. When the areal weight is 20 g/m$^2$ or more, the mechanical strength and electrical conductivity of the electrically conductive porous substrate are improved. On the other hand, when the areal weight is 50 g/m$^2$ or less, the gas diffusivity of the electrically conductive porous substrate is improved. It is more preferable that the areal weight of the electrically conductive porous substrate is 30 to 40 g/m$^2$ because these effects are enhanced.

The areal weight of the electrically conductive porous substrate can be adjusted by controlling the amount of carbon fiber, carbonized resin, or the like, which is a constituent material of the electrically conductive porous substrate.

As the electrically conductive porous substrate, a substrate in which a hydrophobic polymer is attached to the inside by a hydrophobic treatment is preferably used. As the hydrophobic polymer, a fluorinated resin having a fluoroalkyl chain or the like is preferable. Examples of the fluorinated resin include polytetrafluoroethylene (PTFE), a tetrafluoroethylene-hexafluoropropene copolymer (FEP), a tetrafluoroethylene-perfluoroalkyl vinyl ether copolymer (PFA), a tetrafluoroethylene-ethylene copolymer (ETFE), polyvinylidene fluoride (PVDF), and polyvinyl fluoride (PVF), and PTFE or FEP, which exhibits high hydrophobicity, is preferable.

The amount of the hydrophobic polymer is not particularly limited, and is preferably a mass percentage of 0.1 to 20 in a mass percentage of 100 of the entire electrically conductive porous substrate. Within this range, the hydrophobicity is sufficiently exhibited, whereas it is possible to inhibit the hydrophobic polymer from clogging pores serving as diffusion paths or electrical resistance from increasing.

In a polymer electrolyte fuel cell, the gas diffusion electrode substrate is required to have high gas diffusivity for diffusing a gas supplied from a separator to a catalyst and high water drainability for discharging water generated by an electrochemical reaction to the separator. For this purpose, the electrically conductive porous substrate preferably has a peak of a pore size at 10 to 100 $\mu$m. The pore size and the distribution thereof can be determined by a pore size distribution measurement with a mercury porosimeter. In order to determine the pore size of the electrically conductive porous substrate, only the electrically conductive porous substrate may be measured or the gas diffusion electrode substrate after formation of the microporous layer may be measured. In a case where the gas diffusion electrode substrate is measured, each layer structure is confirmed by scanning electron microscopy (SEM) observation of a cross-section area taken along the thickness direction of the gas diffusion electrode substrate, and the pore size of the electrically conductive porous substrate is approximately determined based on the SEM image. Subsequently, a pore size of the electrically conductive porous substrate is determined while associating peaks of a plurality of pore sizes determined using a mercury porosimeter with an approximate value obtained by the SEM image.

In the present invention, a porosity of the electrically conductive porous substrate is preferably 80 to 95%. When the porosity is 80% or more, gas diffusivity is enhanced, and fuel cell performance is improved. Meanwhile, when the porosity is 95% or less, the mechanical strength of the electrically conductive porous substrate is enhanced, and the electrical conductivity is also improved. It is more preferable that the porosity of the electrically conductive porous substrate is 85 to 90% because these effects are enhanced. The porosity of the electrically conductive porous substrate can be measured using a pycnometer or the like.

The thickness of the electrically conductive porous substrate of the present invention is preferably 90 to 180 $\mu$m. Here, the thickness of the electrically conductive porous substrate is a thickness measured when both surfaces are sandwiched at a pressure of 0.15 MPa. When the thickness is 90 $\mu$m or more, mechanical strength is maintained, and handling in a manufacturing process is easy. In addition, since the spring property is enhanced and the gas diffusion electrode substrate can absorb dimensional changes due to expansion and shrinkage of the electrolyte membrane during use of the fuel cell, and since the gas diffusivity in the in-plane direction is improved, the fuel cell performance is improved. Meanwhile, when the thickness of the electrically conductive porous substrate is 180 $\mu$m or less, the gas diffusivity in the thickness direction is enhanced, and the electrically conductive path in the thickness direction is shortened and the electrical conductivity is improved, such that the fuel cell performance is improved. It is more preferable that the thickness of the electrically conductive porous substrate is 110 to 150 $\mu$m because these effects are enhanced.

[Microporous Layer]

The microporous layer will now be described. The gas diffusion electrode substrate of the present invention includes a microporous layer formed on at least one surface of an electrically conductive porous substrate, and preferably includes a microporous layer formed only on one surface of an electrically conductive porous substrate. Examples of the role of the microporous layer include water management such as moisture retention of the electrolyte membrane or the catalyst layer and drainage of generated water, reduction of electrical resistance at an interface between the catalyst layer and the gas diffusion electrode substrate, and inhibition of breakage of the electrolyte membrane due to carbon fibers and the like protruding from the electrically conductive porous substrate, and in the present invention, the microporous layer contains a filler containing an organic polymer for improving moisture retention property and water drainability. Furthermore, a layer containing carbon microparticles and a hydrophobic polymer is preferable.

The component of the filler of the present invention is not particularly limited as long as it contains an organic polymer, and for example, a component containing a phenolic resin, an acrylic resin, a polyester resin, a polyether resin, a fluorinated resin, a styrene resin, a urethane resin, a melamine resin, or the like can be used, and the carbonization yield after heating at 1,000°C for 10 minutes needs to be 55% or more. When the carbonization yield after heating at 1,000°C for 10 minutes is 55% or more, since a site having affinity with water, such as a hydroxyl group or an ester bond, of the organic polymer moderately remains, the moisture retention property or the water drainability is enhanced, and carbonization proceeds moderately, such that the electrical conductivity is improved, thereby improving the fuel cell performance of the fuel cell.

As the organic polymer, it is preferable to use at least one resin selected from the group consisting of a phenolic resin, an acrylic resin, a polyester resin, and a polyether resin, and in particular, it is particularly preferable to use a phenolic resin. The carbonization yield can be measured, for example, using a TGA device such as EXTRA TGA6200 manufactured by SII NanoTechnology Inc. Specifically, the temperature is raised from 50°C to 1,000°C at a temperature rising rate of 10°C/min in a nitrogen atmosphere, and held at 1,000°C for 10 minutes. Thereafter, the carbonization yield is obtained by dividing the mass of the filler after being held at 1,000°C by the initial mass thereof, and multiplying the result by 100.

In addition, a crystallite size Lc (002) of carbon, which indicates a degree of graphitization of the filler containing the organic polymer of the present invention, is preferably 15 angstroms or less. When the crystallite size is 15 angstroms or less, the organic polymer is sufficiently present, and the moisture retention property and the water drainability can be enhanced. Note that, a crystallite size of carbon black is usually larger than 20 angstroms, and a crystallite size of graphite is larger than 100 angstroms.

A mean particle diameter of the filler of the present invention is 5 to 60 $\mu$m. When the mean particle diameter is 5 $\mu$m or more, the moisture retention property and the water drainability are enhanced, and the fuel cell performance at a low current density and a high current density is improved. On the other hand, when the mean particle diameter is 60 $\mu$m or less, the electrical conductivity of the microporous layer is enhanced, and the fuel cell performance is improved. It is more preferable that the mean particle diameter is 10 to 30 $\mu$m.

A method for measuring the mean particle diameter from the gas diffusion electrode substrate will be described. First, 10 samples for cross-sectional observation are randomly prepared by cutting the gas diffusion electrode substrate in parallel in the thickness direction using an ion milling apparatus. At this time, the cutting position of the gas diffusion electrode substrate is not particularly limited, and the size of the sample for cross-sectional observation is 5 mm (width of cross-sectional cut portion) $\times$ 12 mm. Next, using scanning electron microscopy, a 1,000-fold enlarged image of the cross-section area of the microporous layer at an arbitrary position of the sample is acquired, the area of each filler present in the microporous layer in the image is measured with image analysis software "ImageJ", an equivalent circular diameter is calculated by the following equation, and a mean value of the obtained equivalent circular diameters in the image is calculated. The same applies to images of 10 samples, and the overall arithmetic mean value is taken as a mean particle diameter of the filler.

[Math. 1]

$$\text{Equivalent circular diameter [µm]} = \sqrt{(4 \times \text{area of filler}/\pi)}$$

In addition, when the filler of the present invention has a spherical shape, the electrical conductivity of the microporous layer is enhanced, the irregularity of the surface of the microporous layer is large, water vapor easily remains, and the moisture retention property is improved, which is preferable.

In the present invention, when the filler has a spherical shape, an aspect ratio determined by a ratio of a major axis to a minor axis of the filler is in a range of 1.0 to 1.3. Here, the major axis refers to the longest line segment among line segments connecting two points in the filler, and the minor axis is the longest line segment among line segments orthogonal to the major axis.

A method for measuring the aspect ratio will be described. 10 samples for cross-section area observation are randomly prepared by cutting the gas diffusion electrode substrate in parallel in the thickness direction using an ion milling apparatus. At this time, the cutting position of the gas diffusion electrode substrate is not particularly limited, and the size of the sample for cross-section area observation is 5 mm (width of cross-section area cut portion) $\times$ 12 mm. Next, using scanning electron microscopy, a 300-fold enlarged image of the cross-section area of the microporous layer at an arbitrary position of the sample is acquired, the major axis and the minor axis of each filler in the image are measured with image analysis software "ImageJ", an aspect ratio is determined, and a mean value is calculated. The same applies to images of 10 samples, and the overall arithmetic mean value is taken as an aspect ratio of the filler.

A content of the filler of the present invention is a mass percentage of 10 to 45, and preferably a mass percentage of 20 to 30, in a mass percentage of 100 of the microporous layer. When the content of the filler is a mass percentage of 10 or more, sufficient moisture retention property and water drainability are obtained. When the content of the filler is a mass percentage of 45 or less, the mechanical strength, electrical conductivity, and thermal conductivity of the microporous layer are high, and excellent fuel cell performance is obtained. The content of the filler is more preferably a mass percentage of 20 to 40.

A method for measuring the content of the filler from the gas diffusion electrode substrate will be described. First, a part of the microporous layer is scraped from the gas diffusion electrode substrate, and the mass thereof is measured. Next, the microporous layer scraped off is heated in air at 500°C for 1 hour, and only the filler is isolated from the mixture of the remaining carbon microparticles and filler, for example, with a membrane filter or the like, the mass is measured, and the content is calculated as a mass percentage.

In addition, the mean particle diameter of the filler of the present invention is preferably larger than the thickness of the microporous layer. Therefore, the surface roughness of the microporous layer is increased, such that water vapor is likely to remain, leading to improvement of the moisture retention property. Note that, when the microporous layer is formed on the electrically conductive porous substrate, a part of the microporous layer may penetrate into the electrically conductive porous substrate, but the thickness of the microporous layer referred to herein refers to the thickness of a portion that does not penetrate into the electrically conductive porous substrate, and can be calculated by subtracting the thickness of the electrically conductive porous substrate from the thickness of the gas diffusion electrode substrate. The thickness of the electrically conductive porous substrate can be measured before forming the microporous layer, or can be measured after removing the microporous layer from the gas diffusion electrode substrate by a heat treatment in air at 500°C for 1 hour, rubbing off, or the like.

Next, carbon microparticles preferably contained in the microporous layer will be described. Specifically, carbon black, carbon nanofibers, carbon nanotubes, graphene, or the like is used as the carbon microparticles. Among them, carbon black, which is inexpensive, is suitably used.

A specific surface area of the carbon microparticles is preferably 20 to 40 $m^2$/g. A method for measuring the specific surface area is not particularly limited, and can be determined by, for example, a nitrogen adsorption method. The nitrogen adsorption method is a method in which degassed carbon microparticles are sealed together with nitrogen in a container cooled to a liquid nitrogen temperature, the amount of nitrogen adsorbed to the surfaces of the carbon microparticles at equilibrium is measured, and the specific surface area is calculated from this value. When the specific surface area of the carbon microparticles is 20 $m^2$/g or more, dispersibility of the carbon microparticles in an ink for forming a microporous layer described below is enhanced, such that a uniform microporous layer can be formed. In addition, the moisture retention property and the water drainability of the microporous layer is enhanced, such that the fuel cell performance is improved. In addition, when the specific surface area of the carbon microparticles is 40 $m^2$/g or less, the oxidation and corrosion reaction of carbon is suppressed, such that the durability of the fuel cell is enhanced.

In addition, since fibrous carbon microparticles such as carbon nanofibers or carbon nanotubes form electrically conductive paths inside the microporous layer, the fibrous carbon microparticles have an effect of reducing the electrical resistance of the microporous layer.

The hydrophobic polymer preferably contained in the microporous layer is preferably a fluorinated resin having a fluoroalkyl chain in terms of chemical stability, hydrophobicity, and the like, and similarly to the fluorinated resin preferably used in the hydrophobic treatment of the electrically conductive porous substrate, examples thereof include polytetrafluoroethylene (PTFE), a tetrafluoroethylene-hexafluoropropene copolymer (FEP), a tetrafluoroethylene-perfluoroalkyl vinyl ether copolymer (PFA), and a tetrafluoroethylene-ethylene copolymer (ETFE).

Since a fluorinated resin is generally insoluble in water, an organic solvent, or the like, it is preferable to use a dispersion of the hydrophobic polymer processed into microparticles when producing an ink for forming a microporous layer described below. Examples of the dispersion of the hydrophobic polymer in the microparticle form include "POLYFLON (registered trademark)" D-210C, ND-110 (all manufactured by Daikin Industries, Ltd.), 120-JRB, and 31-JR (all manufactured by Chemours-Mitsui Fluoroproducts Co., Ltd.).

Silicone having a siloxane bond can also be used as the hydrophobic polymer.

In addition to the filler or the hydrophobic polymer having a carbonization yield of 55% or more and a mean particle diameter of 5 to 60 μm after heating at 1,000°C for 10 minutes, a thermosetting resin may be contained. Examples of the thermosetting resin include a phenolic resin, an epoxy resin, an acrylic resin, and a furan resin.

Furthermore, pores may be formed in the microporous layer in order to enhance the moisture retention property and the water drainability. The pores are preferably formed by incorporating a pore forming material or the like that burns out at a high temperature into the microporous layer, and then sintering and burning out the pore forming material.

The microporous layer of the present invention preferably has pores having a mean diameter of 10 to 60 μm. When the mean diameter of the pores is 10 μm or more, the water drainability is enhanced, and the fuel cell performance at a high current density is improved. On the other hand, when the mean diameter is 60 μm or less, the moisture retention property is enhanced, and the fuel cell performance at a low current density is improved. It is more preferable that the mean diameter is 30 to 50 μm because these effects are enhanced.

In the present invention, the mean diameter of the pores means a mean value of equivalent circular diameters of the pores. As a measurement method, a cross-section area of a sample obtained by cutting the gas diffusion electrode substrate in parallel in the thickness direction using an ion milling apparatus is enlarged 1,000-fold using scanning electron microscopy to acquire an image, the area of each pore present in the microporous layer in the image is measured using image analysis software "ImageJ", and an equivalent circular diameter is calculated by the following equation. Among the obtained equivalent circular diameters, the mean value of equivalent circular diameters of 1 μm or more is taken as a mean diameter. As the sample, 10 sheets are cut out, and an arithmetic mean value of mean diameters of 10 sheets is taken as a mean diameter of the microporous layer.

[Math. 2]

$$\text{Equivalent circular diameter } [\mu m] = \sqrt{(4 \times \text{area of filler}/\pi)}$$

In addition, an area ratio of the pores formed in the entire cross-section area of the microporous layer (hereinafter, referred to as a pore area ratio) is preferably 10 to 50%. When the pore area ratio is 10% or more, the water drainability is enhanced, and the fuel cell performance at a high current density is improved. On the other hand, when the pore area ratio is 50% or less, the moisture retention property is enhanced, and the fuel cell performance at a low current density is improved. It is more preferable that the pore area ratio is 15 to 30%.

The pore area ratio is an area ratio of pores occupying the entire cross-section area of the sample obtained by cutting the microporous layer in parallel in the thickness direction. As a measurement method, a 1,000-fold enlarged image of a cross-section area is acquired with scanning electron microscopy, the area of pore portions having an equivalent circular diameter of 1 μm or more is measured with image analysis software "ImageJ", and a ratio of the area of pore portions to the area of the entire cross-section area of the microporous layer is determined and taken as a pore area ratio. As the sample, 10 sheets are cut out, and an arithmetic mean value of pore area ratios of 10 sheets is taken as a pore area ratio of the microporous layer.

As a method for forming pores, a method, in which a pore forming material is blended in an ink for forming a microporous layer described below, the ink is applied to an electrically conductive porous substrate, and then, the ink is sintered to burn out the pore forming material, can be used.

A material of the pore forming material is not particularly limited as long as it is a material that burns out or shrinks under the sintering conditions of the gas diffusion electrode substrate to form pores in the microporous layer, and for example, an acrylic resin, a styrene resin, starch, a polylactic acid resin, a sublimable low molecular material, a microballoon, or the like can be used. Herein, the sublimable low molecular material is a low molecular weight organic powder usually having a molecular weight of 1,000 or less, and sublimes and burns out at a sintering temperature. Examples of the sublimable low molecular material include anthracene, pentacene, and phenanthrene. In addition, the microballoon is a hollow particle that greatly swells by heating to form pores around the microballoon, and finally, the resin portion is thermally decomposed or reduced to leave only the pores, and various materials are on the market. Examples thereof include "Matsumoto Microsphere (registered trademark)" (manufactured by Matsumoto Yushi-Seiyaku Co., Ltd.) and "Expancel (registered trademark)" (manufactured by Japan Fillite Co., Ltd.).

When carbon microparticles are contained in the ink for forming a microporous layer, a blending amount of the pore forming material in the ink is preferably 10 to 200 parts by mass and more preferably 30 to 100 parts by mass when a blending amount of the carbon microparticles is 100 parts by mass. When the blending amount of the pore forming material is 10 parts by mass or more, pores are sufficiently present, and the water drainability is improved. When the blending amount of the pore forming material is 200 parts by mass or less, the mechanical strength, electrical conductivity, and thermal conductivity of the microporous layer are excellent, and excellent fuel cell performance is exhibited.

In addition, the microporous layer may contain microparticles of iridium oxide, ruthenium oxide, titanium oxide, or the like, which promote water electrolysis in a reversal potential state during hydrogen deficiency. Furthermore, the microporous layer may contain microparticles of cerium oxide, manganese oxide, or the like for inactivating hydroxyl radicals generated at the anode electrode.

An areal weight of the microporous layer of the present invention is preferably 5 to 35 $g/m^2$. When the areal weight of the microporous layer is 5 $g/m^2$ or more, carbon fibers and the like protruding from the surface of the electrically conductive porous substrate are covered, such that the carbon fibers can be inhibited from damaging the electrolyte membrane. In addition, contact resistance between the gas diffusion electrode substrate and the catalyst layer can be reduced, and drying of the electrolyte membrane can be prevented. In addition, when the areal weight of the microporous layer is 35 $g/m^2$ or less, the water drainability is improved. It is more preferable that the areal weight of the microporous layer is 10 to 25 $g/m^2$ because these effects are enhanced.

In addition, the thickness of the microporous layer is preferably 3 to 55 $\mu$m. When the thickness is 3 $\mu$m or more, carbon fibers and the like protruding from the surface of the electrically conductive porous substrate are covered, such that the carbon fibers can be inhibited from damaging the electrolyte membrane, and the moisture retention property is further improved. On the other hand, when the thickness is 55 $\mu$m or less, the electrical conductivity of the gas diffusion electrode substrate is enhanced, and the water drainability is further improved. It is more preferable that the thickness is 5 to 40 $\mu$m.

The thickness of the microporous layer can be determined by placing the electrically conductive porous substrate on a smooth surface plate, measuring the thickness of the electrically conductive porous substrate at a pressure of 0.15 MPa, then measuring the thickness of the gas diffusion electrode substrate on which the microporous layer is formed in the same manner, and subtracting the thickness of the electrically conductive porous substrate from the thickness of the gas diffusion electrode substrate. When the thickness is measured from the gas diffusion electrode substrate, the microporous layer is heated in air at 500°C for 1 hour and then removed by scraping off, only the electrically conductive porous substrate is taken out, and the thickness can be calculated from a difference in thickness before and after removing the microporous layer.

The arithmetic mean roughness Sa of the surface of the microporous layer of the present invention is 5 to 20 $\mu$m. When Sa is 5 $\mu$m or more, the surface roughness is large, and water vapor is likely to remain, such that the moisture retention property is enhanced and the fuel cell performance at a low current density is improved. On the other hand, when Sa is 20 $\mu$m or less, the adhesiveness between the microporous layer and the catalyst layer is improved, and the mechanical properties and durability of the microporous layer itself are improved. It is more preferable that Sa is 6 to 15 $\mu$m. The arithmetic mean roughness (Sa) can be determined by measuring Sa in an area of 8.4 mm $\times$ 6.0 mm at any four locations on the microporous layer side surface of a 30 mm $\times$ 30 mm gas diffusion electrode substrate sample using a laser microscope or the like, and calculating a mean value thereof.

A fluorine atom/carbon atom ratio (F/C ratio) of the surface of the microporous layer of the present invention is preferably 0.2 to 0.6. When the F/C ratio is 0.2 or more, the hydrophobicity of the surface is enhanced, and the water drainability is improved. On the other hand, when the F/C ratio is 0.6 or less, the moisture retention property is improved.

An oxygen atom/carbon atom ratio (O/C ratio) of the surface of the microporous layer of the present invention is preferably 0.1 or less. When the O/C ratio is more than 0.1, the electrical conductivity deteriorates, and the fuel cell performance may deteriorate.

The F/C ratio and the O/C ratio can be measured by using X-ray photoelectron spectroscopy (XPS), performing elemental analysis at five locations randomly selected on the microporous layer side surface of the gas diffusion electrode substrate, quantifying element concentrations of fluorine (F), oxygen (O), and carbon (C), determining the F/C ratio and the O/C ratio, and calculating a mean value of the five locations.

The microporous layer can be formed by applying an ink for forming a microporous layer containing the filler or carbon microparticles described above to at least one surface of the electrically conductive porous substrate.

The ink may contain a dispersion medium such as water or an organic solvent, and may contain a dispersant such as a surfactant. The dispersion medium is preferably water, and a nonionic surfactant is preferably used as the dispersant.

The ink can be applied to the electrically conductive porous substrate using a variety of commercially available coating apparatuses. As a coating system, a coating system such as screen printing, rotary screen printing, spraying, intaglio printing, gravure printing, die coating, bar coating, or blade coating can be employed. The present coating method is presented for the illustration purpose only, and the coating method is not necessarily restricted thereto.

After the ink is applied to the electrically conductive porous substrate, the ink is preferably dried at a temperature of 80 to 180°C. That is, it is preferable that the coated matter is placed in a dryer whose temperature is set to 80 to 180°C and dried for 2 to 30 minutes. A drying air volume may be appropriately determined, but rapid drying may induce micro cracks in the surface. It is preferable that, after the coated matter is dried, the coated matter is placed in a muffle furnace, a baking furnace, or a high-temperature drying furnace, and sintered preferably at a temperature of 300 to 380°C for 5 to 20 minutes to melt the hydrophobic polymer, thereby forming a microporous layer using a binder between carbon microparticles.

[Gas Diffusion Electrode Substrate]

The thickness of the gas diffusion electrode substrate of the present invention is preferably 130 to 190 $\mu$m. Here, the thickness of the gas diffusion electrode substrate is a thickness measured when both surfaces are sandwiched at a pressure of 0.15 MPa. When the thickness of the gas diffusion electrode substrate is 130 $\mu$m or more, mechanical strength is maintained, and handling in a manufacturing process is easy. Meanwhile, when the thickness of the gas diffusion electrode substrate is 190 $\mu$m or less, gas diffusivity is enhanced, and electrical resistance is reduced, such that fuel cell performance of the fuel cell is improved. The thickness of the gas diffusion electrode substrate can be adjusted by appropriately adjusting the thickness of each of the electrically conductive porous substrate and the microporous layer.

[Membrane Electrode Assembly]

In the present invention, a membrane electrode assembly can be formed by binding the above-described gas diffusion electrode substrate on at least one surface of a polymer electrolyte membrane including a catalyst layer formed on both surfaces. The polymer electrolyte membrane is preferably a polymer electrolyte membrane having high proton conductivity and oxidation resistance and small gas crossover, and examples thereof include a polymer electrolyte membrane formed of a fluorine-based polymer or a hydrocarbon-based polymer. In addition, as the catalyst layer, a catalyst layer formed of a mixture of carbon particles of a carbon-supported catalyst in which catalyst microparticles which are noble metals such as platinum, palladium, ruthenium, iridium, and rhodium or oxides thereof are supported on carbon particles and a proton conductive polymer is preferably applied.

When the gas diffusion electrode substrate is bonded to the polymer electrolyte membrane having the catalyst layer, effects such as water management such as moisture retention of the electrolyte membrane or the catalyst layer and discharge of generated water, reduction of electrical resistance at an interface between the catalyst layer and the gas diffusion electrode substrate, and inhibition of breakage of the electrolyte membrane due to carbon fibers and the like protruding from the electrically conductive porous substrate are exhibited by disposing the microporous layer of the gas diffusion electrode substrate on the catalyst layer.

[Fuel Cell]

The fuel cell of the present invention includes the gas diffusion electrode substrate of the present invention. That is, the fuel cell of the present invention has separators on both sides of the membrane electrode assembly described above. That is, the fuel cell is constituted by arranging separators on both sides of the membrane electrode assembly described above. Usually, a polymer electrolyte fuel cell is constituted by laminating a plurality of membrane electrode assemblies (fuel cells) that are sandwiched by separators from both sides via a gasket. For example, when 200 to 500 fuel cells are prepared and connected in series, a high voltage of 40 kV to 200 kV can be generated, and a fuel cell stack can be used as a power source of a fuel cell vehicle or the like.

EXAMPLES

Hereinafter, the present invention will be specifically described with reference to Examples, but the present invention is not limited to the following description.

[Raw Materials] Filler

· Phenolic resin particles "Bellpearl (registered trademark)" C800 (manufactured by Air Water Bellpearl Inc., spherical shape, mean particle diameter (catalogue value): 15 $\mu$m, aspect ratio: 1.0, carbonization yield after heating at 1,000°C for 10 minutes: 95%, crystallite size Lc (002): 11 angstroms)

· Phenolic resin particles "Bellpearl (registered trademark)" R700 (manufactured by Air Water Bellpearl Inc., spherical shape, mean particle diameter (catalogue value): 15 $\mu$m, aspect ratio: 1.0, carbonization yield after heating at 1,000°C for 10 minutes: 60%)

· Phenolic resin particles "Bellpearl (registered trademark)" C2000SR (manufactured by Air Water Bellpearl Inc., spherical shape, mean particle diameter (catalogue value): 8 $\mu$m, aspect ratio: 1.0, carbonization yield after heating at 1,000°C for 10 minutes: 99%)

· Phenolic resin particles "LPS (registered trademark)" 50C (manufactured by LIGNYTE Co., Ltd., spherical shape, mean particle diameter (catalogue value): 50 µm, aspect ratio: 1.0, carbonization yield after heating at 1,000°C for 10 minutes: 56%)

· Phenolic resin particles "LPS (registered trademark)" 50A (manufactured by LIGNYTE Co., Ltd., spherical shape, mean particle diameter: 50 µm, aspect ratio: 1.0, carbonization yield after heating at 1,000°C for 10 minutes: 52%)

· Phenolic resin particles "Bellpearl (registered trademark)" R100 (manufactured by Air Water Bellpearl Inc., spherical shape, mean particle diameter (catalogue value): 1.5 µm, aspect ratio: 1.0, carbonization yield after heating at 1,000°C for 10 minutes: 60%)

· Phenolic resin particles "LPS (registered trademark)" 100C (manufactured by LIGNYTE Co., Ltd., spherical shape, mean particle diameter (catalogue value): 100 µm, aspect ratio: 1.0, carbonization yield after heating at 1,000°C for 10 minutes: 57%)

· Fibrous conductive potassium titanate "DENTALL (registered trademark)" WK-200B (manufactured by Otsuka Chemical Co., Ltd., fibrous shape, fiber length: 15 µm, aspect ratio: 50, carbonization yield after heating at 1,000°C for 10 minutes: 95%).

<Measurement of Areal Weight of Microporous Layer>

The mass [g] of the electrically conductive porous substrate was measured in a 10 cm square shape using a precision scale. Next, the mass [g] of the gas diffusion electrode substrate on which a microporous layer is formed was measured in the same manner as described above in the form of a 10 cm square. The mass of the electrically conductive porous substrate was subtracted from the mass of the gas diffusion electrode substrate, and the value obtained by dividing the resulting mass by the sample area ($0.01 \text{ m}^2$) was defined as an areal weight [$g/m^2$] of the microporous layer.

<Measurement of Thickness of Microporous Layer>

The electrically conductive porous substrate was placed on a smooth surface plate, and the difference in height between the case in which there was a measurement object (electrically conductive porous substrate) and the case in which there was no measurement object under application of a pressure of 0.15 MPa was measured. Samples were taken at 10 different points, and the measured values of the differences in height were averaged to determine a thickness of the electrically conductive porous substrate. Next, the thickness of the gas diffusion electrode substrate on which the microporous layer was formed was measured in the same manner. The thickness of the electrically conductive porous substrate was subtracted from the thickness of the gas diffusion electrode substrate to obtain the thickness [µm] of the microporous layer.

<Measurement of Carbonization Yield of Filler>

The carbonization yield was measured using a TGA device (EXTRA TGA6200 manufactured by SII). The temperature was raised from 50°C to 1,000°C at a temperature rising rate of 10°C/min in a nitrogen atmosphere, and held at 1,000°C for 10 minutes.
Thereafter, the carbonization yield [%] was obtained by dividing the mass of the filler after being held at 1,000°C by the initial mass thereof, and multiplying the result by 100.

<Calculation of Content of Filler>

A content of the filler can be calculated by the following equation.
Content of filler [mass percentage] = Filler mass contained in microporous layer/Mass of microporous layer.
Here, a method for measuring the content of the filler of the microporous layer [mass percentage] from the gas diffusion electrode substrate will be described.
First, a part of the microporous layer is scraped from the gas diffusion electrode substrate, and the mass thereof is measured (mass A). Next, the microporous layer scraped off was heated in air at 500°C for 1 hour, a mixture of the remaining carbon microparticles and filler was mixed with pure water, only the filler was isolated with a membrane filter having a pore size of 0.45 µm (manufactured by Advantec Toyo Kaisha, Ltd.), and the mass of the membrane filter after drying was measured (mass B) and calculated as mass B/mass A × 100.

<Measurement of Arithmetic Mean Roughness Sa of Surface>

An arithmetic mean roughness (Sa) in an area of 8.4 mm × 6.0 mm on the microporous layer side surface of the gas diffusion electrode substrate was measured using a laser microscope VK-X100 (manufactured by KEYENCE CORPORATION). Sa was measured at arbitrary four points on a 30 mm × 30 mm sample, and a mean value of the measurements was calculated.

<Measurement of Surface F/C Ratio>

Using X-ray photoelectron spectroscopy (XPS) model 5400 (manufactured by ULVAC-PHI, Inc.), elemental analysis was performed at five random points on the microporous layer side surface of the gas diffusion electrode substrate. Element concentrations [%] of fluorine (F) and carbon (C) were quantitatively determined, an F/C ratio was determined, and a mean value of the five points was calculated.

<Measurement of Surface O/C Ratio>

Using X-ray photoelectron spectroscopy (XPS) model 5400 (manufactured by ULVAC-PHI, Inc.), elemental analysis was performed at five random points on the microporous layer side surface of the gas diffusion electrode substrate. Element concentrations [%] of oxygen (O) and carbon (C) were quantitatively determined, an O/C ratio was determined, and a mean value of the five points was calculated.

<Measurement of Mean Diameter of Pores>

First, 10 samples for cross-sectional observation were randomly prepared by cutting the gas diffusion electrode substrate in parallel in the thickness direction using an ion milling apparatus IM4000 (manufactured by Hitachi High-Tech Corporation). At this time, the cutting position of the gas diffusion electrode substrate was not particularly limited, and the size of the sample for cross-sectional observation was 5 mm (width of cross-sectional cut portion) $\times$ 12 mm. Next, using scanning electron microscopy SU8010 (manufactured by Hitachi High-Tech Corporation), a 1,000-fold enlarged image of the cross-section area of the microporous layer at an arbitrary position of the sample was acquired, the area of each pore in the image was measured with image analysis software "ImageJ", and an equivalent circular diameter was calculated by the following equation. Among the obtained equivalent circular diameters, the mean value of equivalent circular diameters of 1 $\mu$m or more was calculated. The same applies to images of 10 samples, and the overall arithmetic mean value was taken as a mean diameter of the pores.

[Math. 3]

$$\text{Equivalent circular diameter } [\mu m] = \sqrt{(4 \times \text{area of filler}/\pi)}$$

<Measurement of Pore Area Ratio>

In the same manner as in <Measurement of Mean Diameter of Pores> described above, 10 samples for cross-sectional observation obtained by cutting the gas diffusion electrode substrate in parallel in the thickness direction were prepared, and a 1,000-fold enlarged image of the cross-section area of the microporous layer at an arbitrary position was acquired. The area of the pore portion having an equivalent circular diameter of 1 $\mu$m or more shown in <Measurement of Mean Diameter of Pores> was measured using image analysis software "ImageJ", and the ratio of the area of the pore portion to the area of the entire microporous layer was determined. The same applies to images of 10 samples, and the overall arithmetic mean value was taken as a pore area ratio [%].

<Evaluation of Fuel Cell Characteristics>

A catalyst paste was prepared by sequentially adding 1.00 g of a platinum-supported carbon material (manufactured by Tanaka Kikinzoku Kogyo K.K., platinum supporting amount: mass percentage of 50), 1.00 g of purified water, 8.00 g of "Nafion" (registered trademark) solution (manufactured by Sigma-Aldrich Co. LLC, "Nafion" (registered trademark), mass percentage of 5.0) and 18.00 g of isopropyl alcohol (manufactured by NACALAI TESQUE, INC.).

Then, "NAFLON (registered trademark)" PTFE tape "TOMBO (registered trademark)" No. 9001 (manufactured by NICHIAS Corporation) which was cut into a size of 50 mm $\times$ 50 mm was coated with the catalyst paste using a spray and dried at ordinary temperature to prepare a PTFE sheet with a catalyst layer having a platinum amount of 0.3 mg/cm$^2$. Subsequently, a polymer electrolyte membrane (film thickness: 10 $\mu$m) was prepared using a dispersion having a mass percentage of 10 of "Nafion (registered trademark)" (manufactured by Sigma-Aldrich Co. LLC), and cut into 80 mm $\times$ 80 mm. The obtained polymer electrolyte membrane was sandwiched between two PTFE sheets with a catalyst layer, the resulting product was pressed at a temperature of 130°C for 5 minutes while pressurized at 5 MPa with a flat press machine, and thus, the catalyst layer was transferred onto the polymer electrolyte membrane. After pressing, the PTFE sheets were removed to prepare a polymer electrolyte membrane with a catalyst layer.

Next, the polymer electrolyte membrane with a catalyst layer was sandwiched between two gas diffusion electrode substrates cut into 50 mm × 50 mm, the resulting product was pressed at a temperature of 130°C for 5 minutes while pressurized at 3 MPa with a flat press machine, and thus, a membrane electrode assembly was prepared. The gas diffusion electrode substrate was disposed so that the surface having the microporous layer was in contact with the catalyst layer.

The obtained membrane electrode assembly was incorporated into a fuel cell evaluation unit cell to measure the voltage when the current density was changed. In addition, the evaluation was carried out with non-pressurized hydrogen and non-pressurized air being supplied to the anode side and the cathode side, respectively.

The cell temperature was set to 65°C, and both hydrogen and air to be supplied were humidified by a humidifying pot set to a temperature of 60°C, such that the humidity in the cell was set to 80%, and the utilization rates of hydrogen and oxygen in the air were set to 70% and 40%, respectively. An output voltage at a current density of 0.5 A/cm$^2$ or 2.0 A/cm$^2$ was measured and used as an index of dry performance (moisture retention property) and wet performance (water drainability).

<Method for Producing Electrically Conductive Porous Substrate>

A polyacrylonitrile carbon fiber "TORAYCA (registered trademark)" T300 (average fiber diameter: 7 μm) manufactured by Toray Industries, Inc. was cut into a length of 6 mm, dispersed in water, and subjected to continuous papermaking. Furthermore, the resulting paper was coated with an aqueous solution of polyvinyl alcohol having a mass percentage of 10 by spray coating, and dried, thereby obtaining a continuous papermaking substrate formed of carbon fibers and having an areal weight of 30 g/m$^2$. An adhesion amount of the polyvinyl alcohol adhered was 15 parts by mass with respect to 100 parts by mass of the papermaking substrate.

Next, a resin composition solution in which flake graphite (average particle size: 5 μm), a phenolic resin (a mixture of a resol type phenolic resin and a novolac type phenolic resin at a mass ratio of 1:1), and methanol were mixed at a mass ratio of 5:10:85 was prepared. Then, the carbon fiber papermaking substrate was continuously coated with the resin composition solution by spray coating so that the total amount of the phenolic resin and the flake graphite was 130 parts by mass with respect to 100 parts by mass of the carbon fibers in the electrically conductive porous substrate, and dried at 100°C for 5 minutes.

Subsequently, the papermaking substrate to which the resin composition was adhered was sandwiched between upper and lower hot platens by a press forming machine, and then subjected to a heat-compression treatment at 180°C for 5 minutes. At this time, a release paper was placed between the papermaking substrate and each of the hot platens so that the hot platens and the papermaking substrate were prevented from adhering to each other. In addition, spacers were disposed at the peripheral portions of the upper and lower hot platens to adjust the thickness of the electrically conductive porous substrate after the heat compression. Thereafter, carbonization was performed by heating at 2,400°C in a nitrogen atmosphere in a heating furnace.

Further, a hydrophobic polymer dispersion prepared by mixing 5 parts by mass of an FEP resin ("NEOFLON (registered trademark)" FEP Dispersion ND-110 manufactured by Daikin Industries, Ltd.) and 95 parts by mass of ion-exchanged water was applied by spray coating, and then dried at 100°C for 5 minutes, thereby obtaining an electrically conductive porous substrate having a thickness of 150 μm and an areal weight of 40 g/m$^2$ at 0.15 MPa.

(Example 1)

Phenolic resin particles "Bellpearl (registered trademark)" C800 as a filler, "DENKA BLACK (registered trademark)" powdery product (manufactured by Denka Company Limited) as carbon microparticles, PTFE as a fluorinated resin as a hydrophobic polymer, "TRITON (registered trademark)" X-100 (manufactured by NACALAI TESQUE, INC.) as a dispersant, and purified water as a dispersion medium were used, and these components were mixed at a blending ratio shown in Table 1 to prepare an ink for forming a microporous layer. Note that, here, a dispersion "POLYFLON (registered trademark)" D-210C (manufactured by Daikin Industries, Ltd.) in which PTFE particles were dispersed in water was used as a source of PTFE. In addition, in the preparation of the ink, raw materials were dispersed using a planetary mixer so that the composition of the ink was uniform.

The electrically conductive porous substrate produced as described in <Method for Producing Electrically Conductive Porous Substrate> was coated with the ink for forming a microporous layer by using a die coater, dried at 120°C for 10 minutes, and then heated at 380°C for 10 minutes. Adhesion between the hydrophobic polymer and the carbon microparticles was promoted, the dispersant and the like were decomposed and removed, and thus, a gas diffusion electrode substrate was prepared. Here, the coating amount was adjusted so that the areal weight of the microporous layer after heating was 12 g/m$^2$. The thickness of the obtained gas diffusion electrode substrate was 160 μm. In addition, the results evaluated as described in

<Calculation of Content of Filler>, <Measurement of Surface F/C Ratio>, and <Measurement of Surface O/C Ratio> are as shown in Table 1.

Next, the fuel cell performance was evaluated as described in <Evaluation of Fuel Cell Characteristics>. The fuel cell performance was excellent as shown in Table 1.

(Example 2)

A gas diffusion electrode substrate was prepared in the same manner as in Example 1, except that phenolic resin particles "Bellpearl (registered trademark)" R700 were used as a filler, and various evaluations were carried out.

(Example 3)

A gas diffusion electrode substrate was prepared in the same manner as in Example 1, except that phenolic resin particles "Bellpearl (registered trademark)" C2000SR were used as a filler, and the areal weight and the thickness were changed as shown in Table 1, and various evaluations were carried out.

(Example 4)

A gas diffusion electrode substrate was prepared in the same manner as in Example 1, except that phenolic resin particles "LPS (registered trademark)" 50C were used as a filler, and various evaluations were carried out.

(Examples 5 and 6)

A gas diffusion electrode substrate was prepared in the same manner as in Example 1, except that the composition of the ink for forming a microporous layer was changed as shown in Table 1, and various evaluations were carried out.

(Example 7)

A gas diffusion electrode substrate was prepared in the same manner as in Example 1, except that phenolic resin particles "LPS (registered trademark)" 50C were used as a filler, and the areal weight and the thickness were changed as shown in Table 1, and various evaluations were carried out.

(Example 8)

A gas diffusion electrode substrate was prepared in the same manner as in Example 1, except that phenolic resin particles "Bellpearl (registered trademark)" C2000SR were used as a filler, and various evaluations were carried out.

(Example 9)

A gas diffusion electrode substrate was prepared in the same manner as in Example 1, except that the areal weight and the thickness were changed as shown in Table 2, and various evaluations were carried out.

(Examples 10 and 11)

A gas diffusion electrode substrate was prepared in the same manner as in Example 1, except that the composition of the ink for forming a microporous layer, the areal weight, and the thickness were changed as shown in Table 2, and various evaluations were carried out.

(Example 12)

A gas diffusion electrode substrate was prepared in the same manner as in Example 1, except that the composition of the ink for forming a microporous layer, the areal weight, and the thickness were changed as shown in Table 2, and various evaluations were carried out. Note that PMMA beads "TECHPOLYMER (registered trademark)" MBX-40 (manufactured by Sekisui Kasei Co., Ltd., mean particle diameter: 40 $\mu$m) were used as a pore forming material. In addition, the results of evaluation as described in <Measurement of Mean Diameter of Pores> and <Measurement of Pore Area Ratio> are as shown in Table 2.

(Comparative Example 1)

A gas diffusion electrode substrate was prepared in the same manner as in Example 1, except that phenolic resin particles "LPS (registered trademark)" 50A were used as a filler, and various evaluations were carried out. In the gas diffusion electrode substrate, the carbonization yield of the filler was as low as 52%, the electrical conductivity deteriorated, and the fuel cell characteristics deteriorated at both a low current density and a high current density.

(Comparative Example 2)

A gas diffusion electrode substrate was prepared in the same manner as in Example 1, except that phenolic resin particles "Bellpearl (registered trademark)" R100 were used as a filler, and the areal weight and the thickness were changed as shown in Table 3, and various evaluations were carried out. In the gas diffusion electrode substrate, the mean particle diameter of the filler was as small as 1.4 $\mu$m, and both the moisture retention property and the water drainability deteriorated, and the fuel cell characteristics deteriorated at both a low current density and a high current density.

(Comparative Example 3)

A gas diffusion electrode substrate was prepared in the same manner as in Example 1, except that phenolic resin particles "LPS (registered trademark)" 100C were used as a filler, and various evaluations were carried out. In the gas diffusion electrode substrate, the mean particle diameter of the filler was as large as 75 $\mu$m, the electrical conductivity deteriorated, and the fuel cell characteristics deteriorated at both a low current density and a high current density.

(Comparative Example 4)

A gas diffusion electrode substrate was prepared in the same manner as in Example 1, except that fibrous conductive potassium titanate "DENTALL (registered trademark)" WK-200B (manufactured by Otsuka Chemical Co., Ltd., fiber length: 15 $\mu$m, carbonization yield after heating at 1,000°C for 10 minutes: 95%) was used as a filler, and various evaluations were carried out. In the gas diffusion electrode substrate, the mean particle diameter of the filler was 0.6 $\mu$m, the electrical conductivity deteriorated, and the fuel cell characteristics deteriorated at both a low current density and a high current density.

(Comparative Examples 5 and 6)

A gas diffusion electrode substrate was prepared in the same manner as in Example 1, except that the composition of the ink for forming a microporous layer was changed as shown in Table 3, and various evaluations were carried out. In the gas diffusion electrode substrate of Comparative Example 5, the content of the filler was as low as 4 in terms of a mass percentage, both the moisture retention property and the water drainability deteriorated, and the fuel cell characteristics deteriorated at both a low current density and a high current density. In the gas diffusion electrode substrate of Comparative Example 6, the content of the filler was as high as 48 in terms of a mass percentage, the electrical conductivity deteriorated, and the fuel cell characteristics deteriorated at both a low current density and a high current density.

(Comparative Example 7)

A gas diffusion electrode substrate was prepared in the same manner as in Example 1, except that a filler was not blended, and the composition of the ink for forming a microporous layer was changed as shown in Table 3, and various evaluations were carried out. Since the gas diffusion electrode substrate did not contain a filler, the gas diffusion electrode substrate was insufficient in both the moisture retention property and the water drainability, and the fuel cell characteristics deteriorated at both a low current density and a high current density.

[Table 1-1]

| | | | Unit | Example 1 | Example 2 | Example 3 |
|---|---|---|---|---|---|---|
| Microporous layer | Composition of ink | "Bellpearl®" C800 | Parts by mass | 4.5 | | |
| | | "Bellpearl®" R700 | Parts by mass | | 4.5 | |
| | | "Bellpearl®" C2000SR | Parts by mass | | | 4.5 |
| | | "LPS®"50C | Parts by mass | | | |
| | | "DENKA BLACK®" | Parts by mass | 6.8 | 6.8 | 6.8 |
| | | PTFE | Parts by mass | 3.4 | 3.4 | 3.4 |
| | | "TRITON®"X-100 | Parts by mass | 13.4 | 13.4 | 13.4 |
| | | Purified water | Parts by mass | 71.9 | 71.9 | 71.9 |
| | Areal weight | | g/m$^2$ | 12 | 12 | 6 |
| | Thickness | | μm | 10 | 10 | 5 |
| | Carbonization yield of filler | | % | 95 | 60 | 99 |
| | Mean particle diameter of filler | | μm | 12 | 11 | 7 |
| | Content of filler | | Mass percentage | 31 | 31 | 31 |
| | Arithmetic mean roughness Sa of surface | | μm | 7 | 7 | 6 |
| | Surface F/C ratio | | - | 0.3 | 0.5 | 0.7 |
| | Surface O/C ratio | | - | 0.005 | 0.02 | 0.004 |
| | Mean diameter of pores | | μm | - | - | - |
| | Pore area ratio | | % | - | - | - |
| Fuel cell | Output voltage (current density 0.5 A/cm$^2$) | | V | 0.774 | 0.767 | 0.770 |
| | Output voltage (current density 2.0 A/cm$^2$) | | V | 0.591 | 0.585 | 0.580 |

[Table 1-2]

| | | | Unit | Example 4 | Example 5 | Example 6 | Example 7 |
|---|---|---|---|---|---|---|---|
| Microporous layer | Composition of ink | "Bellpearl®" C800 | Parts by mass | | 1.4 | 7.5 | |
| | | "BellpearlO" R700 | Parts by mass | | | | |
| | | "Bellpearl®" C2000SR | Parts by mass | | | | |
| | | "LPS®"50C | Parts by mass | 4.5 | | | 4.5 |
| | | "DENKA BLACK®" | Parts by mass | 6.8 | 7.0 | 6.6 | 6.8 |
| | | PTFE | Parts by mass | 3. 4 | 3.5 | 3.3 | 3.4 |
| | | "TRITON®"X-100 | Parts by mass | 13.4 | 13.8 | 13.0 | 13.4 |
| | | Purified water | Parts by mass | 71.9 | 74.2 | 69.6 | 71.9 |
| | Areal weight | | g/m$^2$ | 12 | 12 | 12 | 66 |
| | Thickness | | μm | 10 | 10 | 10 | 55 |
| | Carbonization yield of filler | | % | 56 | 95 | 95 | 56 |
| | Mean particle diameter of filler | | μm | 40 | 11 | 12 | 37 |
| | Content of filler | | Mass percentage | 31 | 12 | 43 | 31 |
| | Arithmetic mean roughness Sa of surface | | μm | 15 | 6 | 18 | 6 |
| | Surface F/C ratio | | - | 0. 4 | 0.4 | 0.2 | 0.2 |
| | Surface O/C ratio | | - | 0.03 | 0.004 | 0.006 | 0.02 |
| | Mean diameter of pores | | μm | - | - | - | - |
| | Pore area ratio | | % | - | - | - | - |
| Fuel cell | Output voltage (current density 0.5 A/cm$^2$) | | V | 0.766 | 0.767 | 0.769 | 0.767 |
| | Output voltage (current density 2.0 A/cm$^2$) | | V | 0.584 | 0.590 | 0.580 | 0.580 |

[Table 2]

| | | | Unit | Example 8 | Example 9 | Example 10 | Example 11 | Example 12 |
|---|---|---|---|---|---|---|---|---|
| | | "Bellpearl ₀" C800 | Parts by mass | | 4.5 | 2.3 | 6.8 | 3.5 |
| | | "Bellpearl ₀" R700 | Parts by mass | | | | | |
| | | "Bellpearl ₀" C2000SR | Parts by mass | 4.5 | | | | |

(continued)

| | | | Unit | Example 8 | Example 9 | Example 10 | Example 11 | Example 12 |
|---|---|---|---|---|---|---|---|---|
| Microporous layer | Composition of ink | "LPS "50C | Parts by mass | | | | | |
| | | "DENKA BLACK " | Parts by mass | 6.8 | 6.8 | 6.8 | 6.8 | 6.8 |
| | | PTFE | Parts by mass | 3.4 | 3.4 | 3.4 | 3.4 | 3.5 |
| | | "TRITON "X-100 | Parts by mass | 13.4 | 13.4 | 13.4 | 13.4 | 13.4 |
| | | "MBX-40" | Parts by mass | | | | | 3.3 |
| | | Purified water | Parts by mass | 71.9 | 71.9 | 71.9 | 71.9 | 71.0 |
| | Areal weight | | g/m$^2$ | 12 | 72 | 16 | 16 | 13 |
| | Thickness | | $\mu$m | 10 | 60 | 25 | 20 | 24 |
| | Carbonization yield of filler | | % | 99 | 95 | 95 | 95 | 95 |
| | Mean particle diameter of filler | | $\mu$m | 7 | 12 | 11 | 11 | 12 |
| | Content of filler | | Mass percentage | 31 | 31 | 18 | 40 | 25 |
| | Arithmetic mean rough-ness Sa of surface | | $\mu$m | 6 | 6 | 6 | 7 | 7 |
| | Surface F/C ratio | | - | 0.4 | 0.2 | 0.3 | 0.2 | 0.4 |
| | Surface O/C ratio | | - | 0.004 | 0.006 | 0.005 | 0.006 | 0.004 |
| | Mean diameter of pores | | $\mu$m | - | - | - | - | 38 |
| | Pore area ratio | | % | - | - | - | - | 10 |
| Fuel cell | Output voltage (current density 0.5 A/cm$^2$) | | v | 0.771 | 0.766 | 0.769 | 0.770 | 0.777 |
| | Output voltage (current density 2.0 A/cm$^2$) | | v | 0.586 | 0.580 | 0.589 | 0.585 | 0.598 |

[Table 3-1]

| | | | Unit | Comparative Example 1 | Comparative Example 2 | Comparative Example 3 |
|---|---|---|---|---|---|---|
| | Composition of ink | "Bellpearl®" C800 | Parts by mass | | | |
| | | "LPS®"50A | Parts by mass | 4.5 | | |
| | | "Bellpearl®" R100 | Parts by mass | | 4.5 | |
| | | "LPS®"100C | Parts by mass | | | 4.5 |
| | | "DENTALL®" WK-200B | Parts by mass | | | |

(continued)

| | | | | Unit | Comparative Example 1 | Comparative Example 2 | Comparative Example 3 |
|---|---|---|---|---|---|---|---|
| Microporous layer | | | "DENKA BLACK®" | Parts by mass | 6.8 | 6.8 | 6.8 |
| | | | PTFE | Parts by mass | 3.4 | 3.4 | 3.4 |
| | | | "TRITON®"X-100 | Parts by mass | 13.4 | 13.4 | 13.4 |
| | | | Purified water | Parts by mass | 71.9 | 71.9 | 71.9 |
| | Areal weight | | | $g/m^2$ | 12 | 4 | 12 |
| | Thickness | | | $\mu m$ | 10 | 3 | 10 |
| | Carbonization yield of filler | | | % | 52 | 60 | 57 |
| | Mean particle diameter of filler | | | $\mu m$ | 39 | 1.4 | 75 |
| | Content of filler | | | Mass percentage | 31 | 31 | 31 |
| | Arithmetic mean roughness Sa of surface | | | $\mu m$ | 15 | 4 | 21 |
| | Surface F/C ratio | | | - | 0.3 | 0.7 | 0.4 |
| | Surface O/C ratio | | | - | 0.04 | 0.01 | 0.03 |
| | Mean diameter of pores | | | $\mu m$ | - | - | - |
| | Pore area ratio | | | % | - | - | - |
| Fuel cell | Output voltage (current density 0.5 $A/cm^2$) | | | V | 0.764 | 0.763 | 0.763 |
| | Output voltage (current density 2.0 $A/cm^2$) | | | V | 0.570 | 0.559 | 0.564 |

[Table 3-2]

| | | | Unit | Comparative Example 4 | Comparative Example 5 | Comparative Example 6 | Comparative Example 7 |
|---|---|---|---|---|---|---|---|
| Microporous layer | Composition of ink | "Bellpearl®" C800 | Parts by mass | | 0.5 | 9.0 | |
| | | "LPSO"50A | Parts by mass | | | | |
| | | "Bellpearl®" R100 | Parts by mass | | | | |
| | | "LPS®"100C | Parts by mass | | | | |
| | | "DENTALL®" WK-200B | Parts by mass | 4.5 | | | |
| | | "DENKA BLACK®" | Parts by mass | 6.8 | 7.1 | 6.6 | 7.1 |
| | | PTFE | Parts by mass | 3.4 | 3.5 | 3.3 | 3.6 |
| | | "TRITON®"X-100 | Parts by mass | 13.4 | 14.0 | 12.9 | 14.0 |
| | | Purified water | Parts by mass | 71.9 | 74.9 | 69.3 | 75.3 |
| | Areal weight | | $g/m^2$ | 12 | 12 | 12 | 12 |
| | Thickness | | $\mu m$ | 10 | 10 | 10 | 10 |
| | Carbonization yield of filler | | % | 95 | 95 | 95 | - |
| | Mean particle diameter of filler | | $\mu m$ | 0.6 | 10 | 13 | - |
| | Content of filler | | Mass percentage | 31 | 4 | 48 | 0 |
| | Arithmetic mean roughness Sa of surface | | $\mu m$ | 5 | 5 | 23 | 4 |
| | **Surface** F/C ratio | | - | 0.4 | 0.5 | 0.2 | 0.7 |
| | Surface O/C ratio | | - | 0.02 | 0.003 | 0.008 | 0.004 |
| | Mean diameter of pores | | $\mu m$ | - | - | - | - |
| | Pore area ratio | | % | - | - | - | - |
| Fuel cell | Output voltage (current density 0.5 A/cm$^2$) | | V | 0.763 | 0.763 | 0.763 | 0.763 |
| | Output voltage (current density 2.0 A/cm$^2$) | | V | 0.569 | 0.570 | 0.564 | 0.560 |

INDUSTRIAL APPLICABILITY

The gas diffusion electrode substrate of the present invention is excellent in moisture retention property and water drainability, and a fuel cell using the gas diffusion electrode substrate is useful because the fuel cell has excellent fuel cell performance at a low current density and a high current density.

**Claims**

1. A gas diffusion electrode substrate comprising a microporous layer formed on at least one surface of an electrically conductive porous substrate, wherein the microporous layer contains a filler containing an organic polymer, the filler having a carbonization yield of 55% or more after heating at 1,000°C for 10 minutes and a mean particle diameter of 5 to 60 $\mu$m, the microporous layer contains the filler in a mass percentage of 10 to 45 in a mass percentage of 100 of the microporous layer, and an arithmetic mean roughness Sa of a surface of the microporous layer is 5 to 20 $\mu$m.

2. The gas diffusion electrode substrate according to claim 1, wherein an F/C ratio of the surface of the microporous layer is 0.2 to 0.6.

3. The gas diffusion electrode substrate according to claim 1 or 2, wherein an O/C ratio of the surface of the microporous layer is 0.1 or less.

4. The gas diffusion electrode substrate according to claim 1 or 2, wherein the mean particle diameter of the filler is larger than a thickness of the microporous layer.

5. The gas diffusion electrode substrate according to claim 1 or 2, wherein the mean particle diameter of the filler is 10 to 30 $\mu$m.

6. The gas diffusion electrode substrate according to claim 1 or 2, wherein the organic polymer is at least one resin selected from the group consisting of a phenolic resin, an acrylic resin, a polyester resin, and a polyether resin.

7. The gas diffusion electrode substrate according to claim 1 or 2, wherein the organic polymer is a phenolic resin.

8. The gas diffusion electrode substrate according to claim 1 or 2, wherein a thickness of the microporous layer is 3 to 55 $\mu$m.

9. The gas diffusion electrode substrate according to claim 1 or 2, wherein the microporous layer has pores having a mean diameter of 10 to 60 $\mu$m, and the microporous layer has an area ratio of the pores formed in the entire cross-section area of the microporous layer of 10 to 50%.

10. The gas diffusion electrode substrate according to claim 1 or 2, wherein the electrically conductive porous substrate is a carbon paper.

11. A fuel cell comprising the gas diffusion electrode substrate according to claim 1 or 2.

## INTERNATIONAL SEARCH REPORT

| | International application No. |
|---|---|
| | **PCT/JP2024/009307** |

**A. CLASSIFICATION OF SUBJECT MATTER**

*H01M 4/96*(2006.01)i; *H01M 8/10*(2016.01)i
FI: H01M4/96 M; H01M4/96 H; H01M4/96 B; H01M8/10 101

According to International Patent Classification (IPC) or to both national classification and IPC

**B. FIELDS SEARCHED**

Minimum documentation searched (classification system followed by classification symbols)

H01M4/96; H01M8/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-022046 A (AISIN CHEMICAL CO., LTD.) 26 January 2017 (2017-01-26) paragraphs [0033], [0037], [0041], [0050], [0066], [0067], table 1, fig. 1 | 1-11 |
| A | JP 7-057741 A (OSAKA GAS CO., LTD.) 03 March 1995 (1995-03-03) claim 1, paragraphs [0001], [0011], [0025], [0056]-[0059], table 1 | 1-11 |
| A | JP 2007-273464 A (GM GLOBAL TECHNOLOGY OPERATIONS INC.) 18 October 2007 (2007-10-18) claims 1, 4, paragraphs [0001], [0016], [0020], fig. 1 | 1-11 |
| A | JP 2001-030241 A (SHIN-KOBE ELECTRIC MACHINERY CO., LTD.) 06 February 2001 (2001-02-06) paragraphs [0001], [0009], [0011] | 1-11 |
| A | WO 2016/076132 A1 (TORAY INDUSTRIES, INC.) 19 May 2016 (2016-05-19) claims 2, 8, paragraphs [0008], [0030], [0035], [0047] | 1-11 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/009307**

| Patent document cited in search report | | | Publication date (day/month/year) | Patent family member(s) | | | Publication date (day/month/year) |
|---|---|---|---|---|---|---|---|
| JP | 2017-022046 | A | 26 January 2017 | (Family: none) | | | |
| JP | 7-057741 | A | 03 March 1995 | (Family: none) | | | |
| JP | 2007-273464 | A | 18 October 2007 | US | 2007/0218343 | A1 | |
| | | | | claims 1, 4, paragraphs [0001], [0022], [0026], fig. 1 | | | |
| | | | | DE | 102007012495 | A1 | |
| | | | | CN | 101083330 | A | |
| JP | 2001-030241 | A | 06 February 2001 | (Family: none) | | | |
| WO | 2016/076132 | A1 | 19 May 2016 | US | 2017/0317357 | A1 | |
| | | | | claims 2, 8, paragraphs [0008], [0044], [0050], [0062] | | | |
| | | | | EP | 3220463 | A1 | |
| | | | | CA | 2965604 | A1 | |
| | | | | KR | 10-2017-0081197 | A | |
| | | | | CN | 107078308 | A | |

Form PCT/ISA/210 (patent family annex) (July 2022)

**EP 4 648 143 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006331717 A
- JP 2016195060 A
- WO 2014014463 A